(19) Europäisches Patentamt
European Patent Office
Office européen des brevets

(11) **EP 4 753 258 A1**

(12) **EUROPEAN PATENT APPLICATION**

(43) Date of publication:
**03.06.2026  Bulletin 2026/23**

(21) Application number: **24306979.6**

(22) Date of filing: **27.11.2024**

(51) International Patent Classification (IPC):
**H04N 19/124** (2014.01)    **H04N 19/147** (2014.01)
**H04N 19/174** (2014.01)    **H04N 19/61** (2014.01)

(52) Cooperative Patent Classification (CPC):
**H04N 19/124; H04N 19/147; H04N 19/174;
H04N 19/61**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE PENDU, Mikael
  35700 RENNES (FR)**
• **URBAN, Fabrice
  35235 THORIGNE-FOUILLARD (FR)**
• **LE LEANNEC, Fabrice
  35830 BETTON (FR)**
• **DE LAGRANGE, Philippe
  35830 BETTON (FR)**

(74) Representative: **Interdigital
Immeuble ZEN 2
845 A, avenue des Champs Blancs
35510 Cesson-Sévigné (FR)**

(54) **BOUND OFFSET SIGNALING WITH ADAPTIVE BITDEPTH FOR QUANTIZATION CONSTRAINED CORRECTION**

(57)    Methods and apparatus are provided for signaling of a bound offset used in the quantization correction and defined from an integer bound offset parameter $O_i$ and an integer shift parameter $S_i$, as the ratio $\frac{O_i}{2^{S_i}}$. The proposed methods apply the same way for the signaling of either a minimum bound offset $o_{min}$ (i.e., i=0) or a maximum bound offset $o_{max}$ (i.e., i=1). In one embodiment the integer bound offset parameter is signaled using its full bitdepth $N_i$. In a second embodiment, the integer bound offset parameter is signaled using a reduced bitdepth $M_i$ and associated mapping parameters. In a second embodiment, signaling or inferring a flag indicates that a default value of the integer bound offset parameter is used.

Obtain the reduced bitdepth $M_i$ of the integer bound offset → Decode $M_i$-bits *bound_offset_index* → Compute $O_i$ by applying mapping function to the *bound_offset_index* using the mapping parameters → Apply QC correction using the bound offset parameters $O_i$ and $S_i$

Obtain mapping parameters associated with the reduced bitdepth $M_i$

Obtain $S_i$

Figure 8

**Description**

TECHNICAL FIELD

At least one of the present embodiments generally relates to a method or an apparatus for bound offset signaling with adaptive bitdepth for quantization constrained correction.

BACKGROUND

The general aspects described herein relate to approaches for video compression and decompression, and particularly to for bound offset signaling with adaptive bitdepth for quantization constrained correction.

SUMMARY

At least one of the present embodiments generally relates to a method or an apparatus for compressing or decompressing a set of images or videos using bound offset signaling with adaptive bitdepth for quantization constrained correction.

According to a first aspect, there is provided a method. The method comprises steps for determining an integer bound offset parameter bitdepth; decoding the integer bound offset parameter bitdepth for an offset index; determining an integer bound offset parameter using the offset index and mapping parameters comprising at least one of a start value for the integer bound offset parameter, and an integer shift parameter; applying quantization constrained correction using the integer bound offset parameter; and, decoding a video signal using the quantization correction.

According to a second aspect, there is provided another method. The method comprises steps for determining a bitdepth of a bound offset index for an integer bound offset parameter to be used for quantization constrained correction of a video signal; and signaling the value of the bound offset index, indicative of the quantization constrained correction used during encoding of the video signal, in a video header of the video bitstream.

According to another aspect, there is provided an apparatus. The apparatus comprises a processor and a memory. The processor can be configured to operate on video signals and data according to the aforementioned methods.

According to another aspect, there is provided an apparatus. The apparatus comprises a processor and a memory. The processor can be configured to encode a video signal or decode video data by executing any of the aforementioned methods.

According to another general aspect of at least one embodiment, there is provided a device comprising an apparatus according to any of the decoding embodiments; and at least one of (i) an antenna configured to receive a signal, the signal including the video signal, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates quantization and dequantization of a transform coefficient c.
Figure 2 illustrates quantization bounds and reconstruction values.
Figure 3 illustrates reconstruction with filtering.
Figure 4 illustrates quantization constrained correction.
Figure 5 illustrates projection function onto the quantization constraint.
Figure 6 illustrates an example of smooth correction function.

Figure 7 illustrates decoding of integer bound offset parameter with full bit depth.
Figure 8 illustrates decoding of integer bound offset parameter with reduced bit depth.
Figure 9 illustrates LUT mapping function.
Figure 10 illustrates linear mapping function.
Figure 11 illustrates use_default flag decoding.
Figure 12 illustrates region-dependent default value of the integer bound offset parameter.
Figure 13 illustrates encoder selection of best bound offset index.
Figure 14 illustrates one embodiment of a first method under the described aspects.
Figure 15 illustrates one embodiment of a second method under the described aspects
Figure 16 illustrates one embodiment of an apparatus under the described aspects.
Figure 17 illustrates a standard, generic, video compression scheme.
Figure 18 illustrates a standard, generic, video decompression scheme.
Figure 19 illustrates a processor-based system for encoding/decoding under the general described aspects.

## DETAILED DESCRIPTION

The embodiments described here are in the field of video compression. To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

The embodiments described herein are in the context of video compression. The embodiments specifically focus on in-loop or out-of-loop filters and is also related to quantization.

In-loop filters are used to enhance reconstructed images before storing them in the reference buffer. In-loop filters form a whole family. Among them, deblocking filters (DBF) aim at reducing blocking artifacts occurring along block boundaries. Deblocking filters are usually designed to improve subjective quality, that is, the noticeability by the human visual system of such coding errors. In usual video coding standards such as HEVC and WC, deblocking filters are predetermined based on coding information (such as prediction modes, motion vectors, transform coefficients) and on local variations across block boundaries. On the other hand, adaptive loop filters (ALF) are learnt at encoder side in order to minimize the mean squared error with respect to source images, then the learned filter weights are written to the bitstream. Adaptive loop filters are applied at CTU-level, while deblocking filters are applied along block borders.

In another work, the quantization-constrained (QC) correction filter adds a complementary step to existing filters with the goal to prevent these filters from losing information carried by the quantized transform coefficients signaled in the bitstream, while still preserving the filtering effect.

At least one of the embodiments propose signaling additional bound offset information needed to compute the correction bounds used in the QC correction.

**Scalar quantization in High Efficiency Video Coding (HEVC)**

HEVC and WC standards specify conventional independent scalar quantization with Uniform Reconstruction Quantizers (URQs). The reconstructed transform coefficients $c_r$ of URQs are completely denoted by integer multiples of a quantization step size $\Delta$ (a.k.a. quantization step) which depends on a quantization parameter (QP). This integer specifies the associated transform coefficient level, which is transmitted in the bitstream as quantization levels $c_q$. On the decoder side, given a quantization level $c_q$ and a quantization step size $\Delta$, a reconstructed transform coefficient $c_r$ may be generated as follows :

$$c_r = Q^{-1}(c_q) = c_q \times \Delta \qquad (1)$$

On the encoder side, given a coefficient c (a.k.a a transform coefficient or more precisely a prediction residual transform coefficient) and a quantization step size $\Delta$, a quantization level $c_q$ may be generated as follows:

$$c_q = Q(c) = \lfloor abs(c)/\Delta + a \rfloor \times sgn(c), \qquad (2)$$

where $\lfloor . \rfloor$ is the floor operation (i.e. rounding to the lower integer), *abs* is the absolute value, *sgn* is the sign function (i.e. returns 1 if c>0, -1 if c<0 and 0 if c=0), and *a* is a parameter such that 0<a<1. With this quantization method, every quantization level $c_q$ is associated to quantization bounds $inf_Q(c_q)$ and $sup_Q(c_q)$ such that an original coefficient c between $inf_Q(c_q)$ and $sup_Q(c_q)$ is quantized to $c_q$. Hence assuming this quantization method was used by the encoder and given a quantization level $c_q$, the

$$inf_Q(c_q) = \begin{cases} (c_q - o_{max}) \times \Delta & if \ c_q \leq 0 \\ (c_q + o_{min}) \times \Delta & if \ c_q > 0 \end{cases}, \qquad (3)$$

$$sup_Q(c_q) = \begin{cases} (c_q - o_{min}) \times \Delta & if \ c_q < 0 \\ (c_q + o_{max}) \times \Delta & if \ c_q \geq 0 \end{cases}, \qquad (4)$$

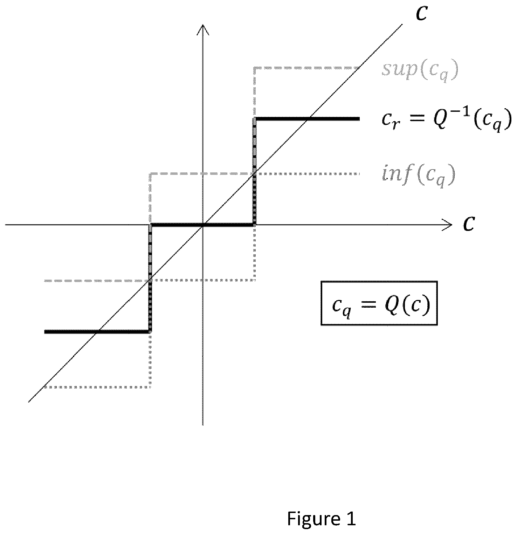

original coefficient c associated with $c_q$ is known to be between $inf_Q(c_q)$ and $sup_Q(c_q)$, as illustrated in Figure 1. In the case of uniform quantization with quantization step size $\Delta$ and parameter *a*, the inferior and superior quantization bounds are defined as follows:

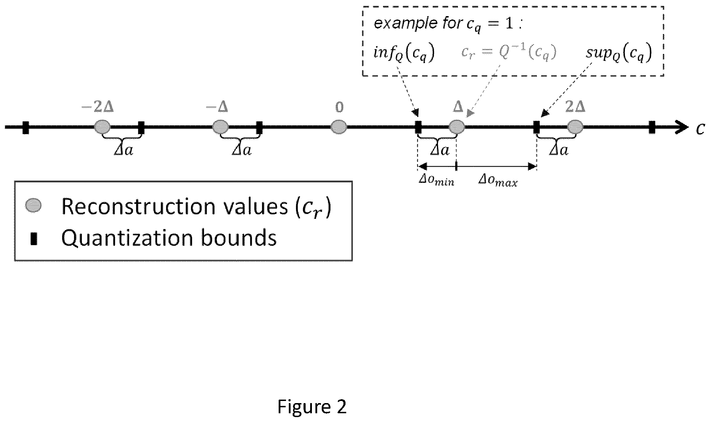

with minimum offset $o_{min}$ and maximum offset $o_{max}$ defined as $o_{min} = -a$ and $o_{max} = 1 - a$. This parameterization of the quantization bounds, and reconstruction values is further illustrated in Figure 2.

The encoder may use alternative strategies to select the quantization levels $c_q$. For example, rate distortion optimized quantization (RDOQ) optimizes the quantization levels accounting not only for the distortion (i.e., MSE), but also for the rate. In this case, it is no longer guaranteed that the original coefficients c are between the bounds $inf_Q(c_q)$ and $sup_Q(c_q)$.

In the quantization constrained correction, c is assumed to be bounded by $inf_Q(c_q)$ and $sup_Q(c_q)$, where $inf_Q(c_q)$ and $sup_Q(c_q)$ can be determined on the decoder side knowing the quantization level $c_q$, the scalar quantizer Q (a.k.a. scalar quantization operation) and its quantization parameter (QP). If the encoder uses quantization strategies that may break this assumption, such as RDOQ, the method remains applicable.

**Quantization constrained correction filter**

In the quantization-constrained correction filter, a quantization constraint is defined as the following equation:

$$Q(c_x) = c_q, \qquad (5)$$

where Q is a scalar quantization operation (a.k.a. scalar quantizer), $c_q$ is the quantization level of a prediction residual transform coefficient c, and $c_x$ is a reconstructed value of the corresponding transform coefficient c. When no in-loop or out-of-loop filter is applied to a reconstructed picture, each coefficient $c_x$ is obtained as $c_x = c_r$. Since $c_r = Q^{-1}(c_q)$, its value is between the quantization bounds $inf(c_q)$ and $sup(c_q)$ (see Figure 1). Therefore, in this case, the quantization constraint $Q(c_r) = c_q$ is satisfied. Assuming that each quantization level was determined by the encoder as $c_q = Q(c)$, where *c* is the original (unquantized) coefficient, then $Q(c_r) = Q(c)$, which is a necessary condition to reconstruct the original coefficient c without error. More generally, the absolute error $|c_r - c|$ between a reconstructed coefficient and the corresponding original coefficient is such that $0 \leq |c_r - c| < sup_Q(c_q) - inf_Q(c_q)$.

However, in the case of filtering the reconstructed picture (e.g., with DBF, SAO, ALF, etc.), each coefficient $c_x$ is defined as $c_x = c_f$ where $c_f$ is the corresponding prediction residual transform coefficient of said reconstructed and filtered picture ($c_f$ may not be computed explicitly in video coding). In this case, $c_x$ might not satisfy the above quantization constraint anymore, resulting in a loss of information. For example, the DBF filter improves the subjective quality by removing block discontinuities, but it may also remove some details in the filtered area at the borders of the blocks. As a result, for some coefficients, we may have $c_f > sup_Q(c_q)$ or $c_f < inf_Q(c_q)$, and thus $Q(c_f) \neq c_q$. Said otherwise, the quantization constraint is not necessarily satisfied. This results in a sub-optimal MSE of the filtered picture since the corresponding original coefficient c is expected to be in the range $[inf_Q(c_q), sup_Q(c_q)]$. Thus, $c_f$ is necessarily different from the original coefficient c (i.e. $|c_f - c| > 0$), and the error $|c_f - c|$ is not bounded by $sup_Q(c_q) - inf_Q(c_q)$. Although the ALF filter is designed to reduce the MSE between the original and the reconstructed and filtered picture, it does not guarantee that the quantization constraint $Q(c_f) = c_q$ is satisfied for every coefficient $c_f$, hence potentially leading to sub-optimal MSE given that the quantization levels $c_q$ are known to both the encoder and the decoder.

The QC correction filter solves this problem by enforcing the quantization constraint on the prediction residual transform coefficients of the filtered picture.

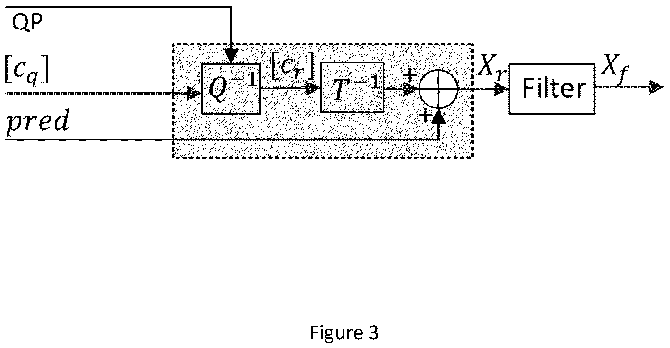

The QC correction is applied to an image block $X_f$ obtained by filtering a block $X_r$ previously obtained using conventional reconstruction steps in video coding, as shown in Figure 3. These steps include:

1) Scalar dequantization of quantization levels $c_q$ to produce reconstructed coefficients $c_r = Q^{-1}(c_q)$, where the dequantization function $Q^{-1}$ is parameterized by a quantization parameter QP and where each quantization level $c_q$ is assigned to a position within the block.
2) Inverse transform $T^{-1}$ applied to the coefficients $c_r$, in order to obtain a prediction residual block.
3) Reconstruction of the block $X_r$ as the sum between the prediction residual block and a prediction block *pred.*

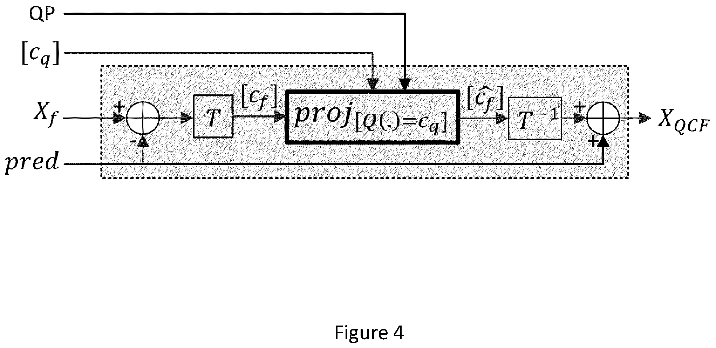

After filtering $X_r$ to produce $X_f$, the QC correction described in Figure 4 first converts $X_f$ back to prediction residuals and compute its transform coefficients $c_f$ in order to correct the values of these coefficients using a correction step that ensures that the quantization constraint $Q(\widehat{c_f}) = c_q$ is satisfied for the corrected transform coefficient $\widehat{c_f}$. The corrected transform coefficients are then converted back to obtain the corrected image block $X_{QCF}$ using the inverse transform $T^{-1}$ and the summation with the prediction *pred.* The steps of the QC correction are further detailed hereafter:

Prediction subtraction:

$X_f$ is converted back to prediction residuals. To this aim, the prediction block *pred* is subtracted from the filtered image block $X_f$ in order to obtain a filtered prediction residual block. The prediction *pred* is equal to the prediction used in the reconstruction stage. Therefore, the prediction block *pred* does not have to be computed again using the codec's prediction mechanisms. Instead, the prediction block may be stored in a buffer during the reconstruction and reused for the QC correction.

Forward Transform:

The filtered prediction residual block is then converted back to the transform domain using the forward transform $T$. In the case where several types of transforms or inverse transforms may be applied (e.g., DCT-II, DST-7, DCT-8), the QC correction uses the forward transform $T$ of the same type as the inverse transform $T^{-1}$ used during the reconstruction stage. For example, if a block X is reconstructed using the inverse of the DCT-II at S802, its corresponding block (i.e. the block of coefficients $c_f$ obtained from X) in the QC correction is transformed with forward DCT-II. The forward transform thus produces a new block of prediction residual transform coefficients $c_f$, named more simply transform coefficients $c_f$, each located at a given position within the block. Each transform coefficient $c_f$ can thus be associated with the quantization level $c_q$ used during the reconstruction stage, and which is located at the same position within the block.

Projection to the quantization constraint:

Each transform coefficient $c_f$ of the block of prediction residual transform coefficients is corrected to obtain a block of corrected prediction residual transform coefficients $\widehat{c_f}$, named more simply corrected transform coefficient $\widehat{c_f}$. The corrected version is computed as $\widehat{c_f} = proj_{[Q(.)=c_q]}(c_f)$, where $proj_{[Q(.)=cq]}$ is a correction function (also called projection function onto the quantization constraint). This correction function ensures that the constraint $Q(\widehat{c_f}) = c_q$ is satisfied, where $c_q$ is the quantization level associated with $c_f$, and where Q is the scalar quantizer associated to the scalar dequantizer $Q^{-1}$ used in the reconstruction stage. The correction function can be defined as follows:

$$proj_{[Q(.)=c_q]}(c_f) = \min(\max(c_f, inf_Q(c_q)), sup_Q(c_q)) \qquad (6)$$

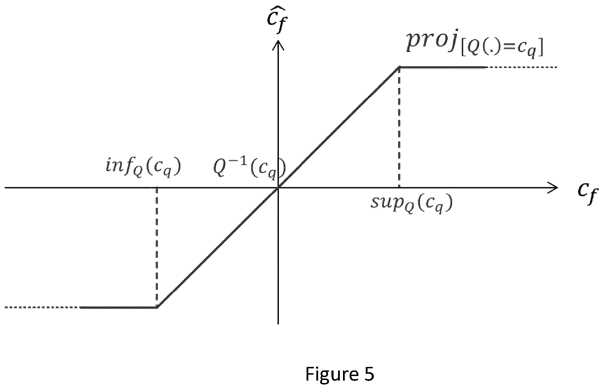

It is illustrated in Figure 5. With this definition, each corrected transform coefficient $\widehat{c_f}$ is always between the quantization bounds $inf_Q(c_q)$ and $sup_Q(c_q)$ of the quantization level $c_q$ for the quantizer Q. Hence $\widehat{c_f}$ satisfies $Q(\widehat{c_f}) = c_q$. However, if $c_f$ is already within the quantization bounds, no correction is applied (i.e. $\widehat{c_f} = c_f$), which preserves the filtering effect.

The correction function in Equation 6 is defined to enforce the quantization constraint while also minimizing the

squared error $\left(\widehat{c}_f - c_f\right)^2$ between the corrected and the uncorrected transform coefficient. However, other functions may be used. For example, a more general clipping function can be defined as $\widehat{c}_f = \min(\max(c_f, b_{inf}) b_{sup})$ where the correction bounds $b_{inf}, b_{sup}$ may be computed similarly to $inf_Q(c_q)$ and $sup_Q(c_q)$ using Equations 3 and 4 respectively, but where the values of the parameters $o_{min}$ and $o_{max}$ are set independently of the parameter $a$. For example, $o_{min}$ and $o_{max}$ may be pre-determined parameters known to both the encoder and decoder. Note that using $o_{min}$ and $o_{max}$ such that $-a \leq o_{min} < o_{max} \leq 1 - a$ ensures that $inf_Q(c_q) \leq b_{inf} < b_{sup} \leq sup_Q(c_q)$. Hence, assuming that $c_q$ was computed with the quantization function in Equation 2 by the encoder, using such values of $o_{min}$ and $o_{max}$ still ensures that the quantization constraint $Q\left(\widehat{c}_f\right) = c_q$ is satisfied (since $inf_Q(c_q) < b_{inf} \leq \widehat{c}_f \leq b_{sup} < sup_Q(c_q)$ ). However, if other quantization methods are used by the encoder (e.g., RDOQ), the original coefficient may not be between the bounds $inf_Q(c_q)$ and $sup_Q(c_q)$ defined in Equations 3 and 4. Hence, in such cases, it may be advantageous to compute the correction bounds $b_{inf}$ and $b_{sup}$ using other values of $o_{min}$ and $o_{max}$ that do not necessarily satisfy the constraint $-a \leq o_{min} < o_{max} \leq 1 - a$.

In another example, a smooth version of the correction function $proj_{[Q(.)=cq]}$ may be used such as:

$$\widehat{c}_f = s \cdot \tanh\left(\frac{c_f - o}{s}\right) + o, \qquad (7)$$

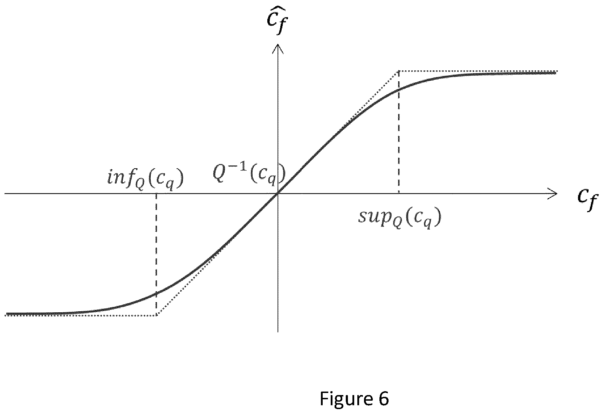

with a scale $s = \frac{sup_Q(c_q) - inf_Q(c_q)}{2}$ and an offset $o = \frac{sup_Q(c_q) + inf_Q(c_q)}{2}$. This smooth function is illustrated by Figure 6. Similarly to the previous example, the correction bounds $b_{inf}$ and $b_{sup}$ may be used instead of the inferior and superior bounds $inf_Q(c_q)$ and $sup_Q(c_q)$ respectively for the computation of the scale and offset parameters s and o.

Inverse Transform and addition with prediction:

After enforcing the quantization-constraint in the residual transform domain, the corrected transform coefficients $\widehat{c}_f$ are converted back to the image domain to obtain a final corrected image block $X_{QCF}$. This is performed by first applying the inverse transform again to obtain a block of corrected prediction residuals. The same inverse transform $T^{-1}$ is used as in the reconstruction stage. Finally, the prediction block *pred* is added back to the block of corrected prediction residuals to obtain a corrected image block $X_{QCF}$ which satisfies the quantization constraint.

**Integer bound offset parameterization for integer bound computation.**

For practical computation of the bounds using the bound offsets $o_{min}$ and $o_{max}$, an integer approximation of Equations 3 and 4 may be applied, based on an integer parameterization of the bound offsets of the form $o_{min} = \frac{O_0}{2^{S_0}}$ and $o_{max} = \frac{O_1}{2^{S_1}}$, where $O_0$ and $S_0$ are respectively the integer bound offset parameter and the integer shift parameter of the minimum bound offset, and $O_1$ and $S_1$ are respectively the integer bound offset parameter and the integer shift parameter of the maximum bound offset. Each integer bound offset parameter $O_i$ (with $i = 0$ or $i = 1$) is represented by $N_i$ bits and a starting value $start_i$, i.e., $O_i$ can take $2^{N_i}$ integer values in the range $[start_i, start_i + 2^{N_i} - 1]$. For example, the values of $S_i$ and $start_i$ may be fixed as $S_i = N_i - 1$ and $start_i = -2^{S_i}$ so that the corresponding bound offset has $2^{N_i}$ possible values uniformly spaced in the range $[-1,1[$. Alternatively, $S_i$ and $start_i$ may be fixed as $S_i = N_i - 1$ and $start_i = 1 - 2^{S_i}$ so that the corresponding bound offset has $2^{N_i}$ possible values uniformly spaced in the range $]-1,1]$.

In existing video coding standards such as HEVC and VVC, the quantization step $\Delta$ is also represented with integer parameters $scale_\Delta$ and $shift_\Delta$ as $\Delta = scale_\Delta / 2^{shift_\Delta}$ in order to perform dequantization with integer-based computations.

Based on these integer parameterizations, a correction bound $b(c_q)$ associated to a quantization level $c_q$ may be computed using only operations on integers: additions, multiplications and bitshifts (i.e. leftshift «, or rightshift »). For example, using an integer bound offset parameter 0, its corresponding shift S, and the quantization step parameters $scale_\Delta$ and $shift_\Delta$, a correction bound $b(c_q)$ may be computed as:

$$b(c_q) = \begin{cases} (num + add) \gg shift & if \ shift > 0 \\ num \ll -shift & if \ shift \leq 0 \end{cases} \qquad (8)$$

where $num = ((c_q \ll S) + O) * scale_\Delta$, $shift = shift_\Delta + S$, and $add$ is a value determined depending on the rounding strategy. For example, using $add = 1 \ll (shift - 1)$, Equation 8 approximates the result of the division $\frac{num}{2^{shift}}$ with the closest integer when $shift > 0$.

For each coefficient $c_f$ associated to a quantization level $c_q$, its inferior and superior correction bounds $b_{inf}$ and $b_{sup}$ may thus be computed with this method using values of 0 and S selected depending on the sign of $c_q$. For example, considering the integer parameterization of $o_{min}$ (with $O_0$ and $S_0$) and $o_{max}$ (with $O_1$ and $S_1$), the inferior bound in Equation 3 may be approximated by an inferior correction bound $b_{inf}$ computed with Equation 8 using S = $S_1$ and 0 = -$O_1$ if $c_q \leq 0$, or S = $S_0$ and 0 = $O_0$ if $c_q > 0$. Similarly, the superior bound in Equation 4 may be approximated by a superior correction bound $b_{sup}$ computed with Equation 8 using S = $S_0$ and 0 = -$O_0$ if $c_q < 0$ or S = $S_1$ and 0 = $O_1$ if $c_q \geq 0$.

**Problem to be solved**

The bound offsets $o_{min}$ and $o_{max}$ of the true quantization bounds $inf_Q(c_q)$ and $sup_Q(c_q)$ are known to be fixed as $o_{min} = -a$ and $o_{max} = 1 - a$ in the case where the encoder performs quantization as in Equation 2. However, while video coding standards specify how to perform dequantization, the quantization process may depend on the encoder implementation. For instance, the VTM reference software of VVC may apply quantization as in Equation 2, where the value of the parameter $a$ depends on heuristics chosen by the encoder and is not known to the decoder. In more advanced quantization tools such as RDOQ (Rate distortion optimized quantization) or DepQuant (dependent quantization) the encoder further optimizes the quantization levels signaled to the decoder based on a rate distortion cost, hence the quantization bounds are also unknown to the decoder. Furthermore, even in the case where the true quantization bounds $inf_Q(c_q)$ and $sup_Q(c_q)$ can be derived by the decoder, the coding performance of the QC correction may be improved by using correction bounds $b_{inf}$ and $b_{sup}$ that are different from $inf_Q(c_q)$ and $sup_Q(c_q)$. For these reasons, it is necessary to signal the bound offsets $o_{min}$ and $o_{max}$ to compute the correction bounds on the decoder side.

At least one of the present embodiments describe the signaling of a bound offset used in the QC correction and defined from an integer bound offset parameter $O_i$ and an integer shift parameter $S_i$, as the ratio $\frac{O_i}{2^{S_i}}$. The proposed methods apply the same way for the signaling of either a minimum bound offset $o_{min}$ (i.e., i=0) or a maximum bound offset $o_{max}$ (i.e., i=1).

The present embodiments describe:

1) A first embodiment where the integer bound offset parameter is signaled using its full bitdepth $N_i$.
2) A second embodiment where the integer bound offset parameter is signaled using a reduced bitdepth $M_i$ and associated mapping parameters.
3) A third embodiment for signaling or inferring a flag indicating that a default value of the integer bound offset parameter is used.
4) An embodiment for adapting the default value, or the mapping parameters associated with a reduced bitdepth $M_i$, based on properties of the region to encode or decode.
5) An encoder embodiment for determining the best bound offset
6) An offline training step for determining mapping parameters or default values of the integer bound offset parameter to be used in the encoder and decoder.
7) An embodiment for reusing mapping parameters or default values from previous regions.

**Integer bound offset parameter signaling with full bit depth.**

The integer bound offset parameter $O_i$ can take $2^{N_i}$ possible integer values in the range [$start_i$, $start_i + 2^{N_i} - 1$]. Hence, in a first embodiment, $O_i$ is directly signaled using its full bitdepth $N_i$. More precisely, an index *bound_offset_index* equal to $O_i - start_i$ (i.e., with values in the range [0, $2^{N_i} - 1$]) is signaled in the bitstream using $N_i$ bits.. The *bound_offset_index* may be signaled in the slice header, picture header, etc... or in the VCL layer using Cabac entropy coder. For example, the *bound_offset_index* may be signaled with the first CTU data.

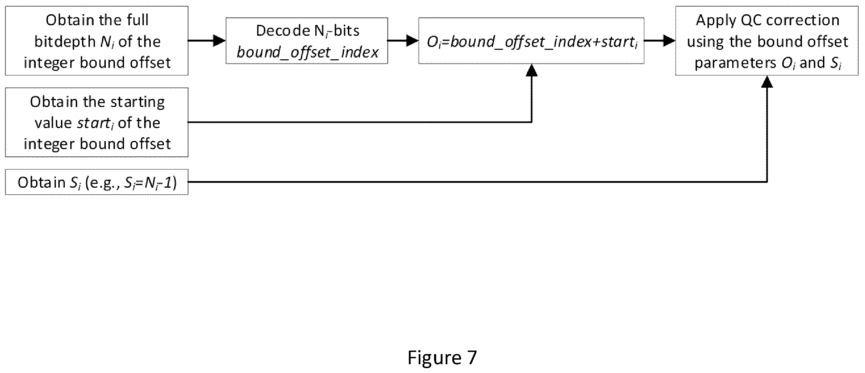

Figure 7 illustrates the decoding of the bound offset parameters used in the QC correction according to this embodiment. The full bitdepth $N_i$, the starting value $start_i$ and the integer shift parameter $S_i$ are obtained either as fixed values known to the encoder and decoder, or by decoding signaled values in the bitstream e.g., in Sequence Parameter Set (SPS), Picture parameter set (PPS), picture header, slice header, etc. In a variant $N_i$ may be determined from $S_i$ (e.g., as $N_i = S_i + 1$), or $S_i$ may be determined from $N_i$ (e.g., as $S_i = N_i - 1$). The decoder then decodes the $N_i$-bits *bound_offset_index* and directly computes the integer bound offset parameter as $O_i = bound\_offset\_index + start_i$. The parameters $O_i$ and $S_i$ of the bound offset are then used to apply the QC correction.

An example of syntax for coding the integer bound offset parameter according to the first embodiment is depicted in Table 1.

*Table 1: example of syntax for coding the integer bound offset parameter according to the first embodiment*

| slice_header() { | Descriptor |
|---|---|
| **use_qc** | u(1) |
| if (use_qc) { | |
| for(int i=0;i<2;i++){ | |
| **bound_offset_index** | u(N[i]) |
| bound_offset[i] = bound_offset_index + start[i] | |
| } | |
| } | |
| use_qc equal to 0 indicates that no qc correction is performed and the corresponding parameters are not coded. use_qc equal to 1 indicates that bound offset indexes are coded.<br>**bound_offset_index** is the bound offset index used to derive the integer bound offset $O_i$ called bound_offset[i] in the syntax table. The derivation also uses the staring value start[i] and is performed as bound_offset[i]= bound_offset_index + start[i]. | |

**Integer bound offset parameter signaling with reduced bit depth.**

In a second embodiment, the signaling of the integer bound offset parameter $O_i$ is performed with a reduced bitdepth, i.e., using a signaling bitdepth $M_i$, where $M_i < N_i$. In this case, only a subset of $2^{Mi}$ values of $O_i$ are allowed. Hence, an index *bound_offset_index* with values in the range $[0, 2^{Mi} - 1]$ is signaled using $M_i$ bits, where each value of *bound_offset_index* is mapped to one of the allowed values of $O_i$.

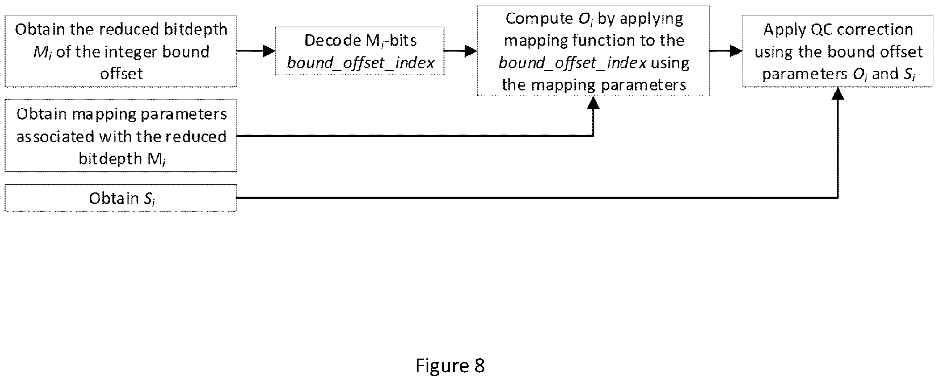

Figure 8 illustrates the decoding of the bound offset parameters used in the QC correction according to this embodiment. The reduced bitdepth $M_i$, a set of mapping parameters associated with the reduced bitdepth $M_i$, and the integer shift parameter $S_i$ are obtained either as fixed values known to the encoder and decoder, or by decoding signaled values in the bitstream e.g., in Sequence Parameter Set (SPS), Picture parameter set (PPS), picture header, slice header, etc. The decoder then decodes the $M_i$-bits *bound_offset_index* and computes $O_i$ by applying a mapping function to the *bound_offset_index* using the mapping parameters. The parameters $O_i$ and $S_i$ of the bound offset are then used to apply the QC correction.

It can be noted that the allowed values of $O_i$ are between a new starting value *map_start* and ending value *map_end* respectively defined as the minimum and maximum output values of the mapping function (with corresponding mapping parameters) given inputs in the range $[0, 2^{Mi} - 1]$. Since the values of $O_i$ are also expected to be in the range $[start_i, start_i + 2^{Ni} - 1]$, the mapping function and mapping parameters may thus be defined such that $map\_start \geq start_i$ and $map\_end \leq start_i + 2^{Ni} - 1$.

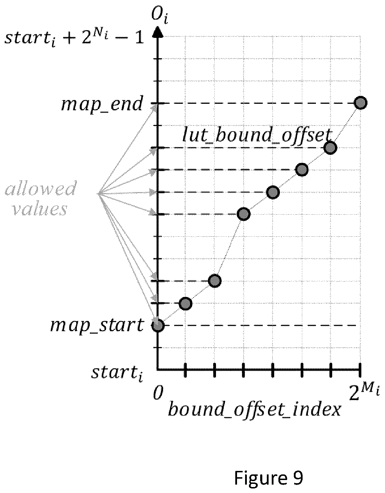

In a first example illustrated in Figure 9, the mapping function is a LUT (lookup table) with $2^{Mi}$ entries called *lut_bound_offset.* The integer bound offset parameter is thus computed from the *bound_offset_index* as $O_i$ = *lut_bound_d_offset*[*bound_offset_index*], In a variant, the LUT is directly used for determining the mapping between the signaled index *bound_offset_index* and the non-integer bound offset (i.e., $o_{min}$ or $o_{max}$). In this case, the LUT may have non-integer output values, and the correction bounds $b_{inf}$ and $b_{sup}$ may be directly computed from the bound offsets $o_{min}$ and $o_{max}$ (for example using Equations 3 and 4).

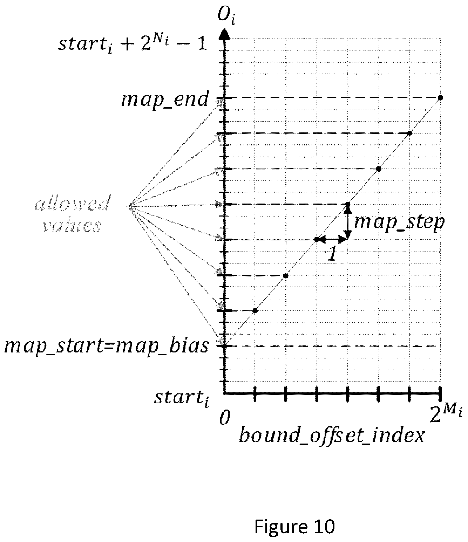

In another example illustrated in Figure 10, a linear mapping is used to compute $O_i$ from the *bound_offset_index.* The linear mapping may be represented by an integer scaling factor called *map_step* (with $map\_step \geq 1$) and an integer bias value called *map_bias.* In this case, $O_i$ may be computed by multiplying the *bound_offset_index* by *map_step* and then by adding the value *map_bias.* The starting and ending allowed values, *map_start* and *map_end* are thus defined as $map\_start$ = *map_bias* and $map\_end$ = *map_bias* + $(2^{Mi} - 1)$ ∗ *map_step.*

In a variant, the scaling factor of the linear mapping is restricted to be a power of two, i.e., $map\_step = 2^{map\text{-}shift}$, where *map_shift* is an integer parameter such that $map\_shift \geq 0$. Hence, the scaling operation may be performed using a leftshift operation, i.e., as *bound_offset_index* « *map_shift,* instead of multiplying the *bound_offset_index* with the scale *map_step.* In this case, the scale parameter *map_step* is not used and it may not be explicitly defined.

In another variant the linear mapping is applied by first summing the *bound_offset_index* with *map_bias* and then scaling the result (i.e., either multiplying with *map_step* or leftshifting with *map_shift*). In this variant, the starting and ending allowed values are defined as $map\_start$ = *map_bias* ∗ *map_step* and $map\_end$ = $(map\_bias + 2^{Mi} - 1)$ ∗ *map_step* (where the multiplication with *map_step* may be replaced by a leftshift with the *map_shift* parameter).

In another variant, $O_i$ is computed by applying the linear mapping to a centered index, where the centered index is the difference between the *bound_offset_index* and its midrange value. For example, the midrange value may be equal to $2^{Mi-1}$ or $2^{Mi-1} - 1$, which may be computed using a leftshift operation, for example as *midrange* = 1 « ($M_i$ - 1) or *midrange* = (1 « ($M_i$ - 1)) - 1. In this variant, the starting and ending allowed values are defined as *map_start* = *midrange* ∗ *map_step* + *map_bias* and *map_end* = (*midrange* + $2^{Mi}$ - 1) ∗ *map_step* + *map_bias* (where the multiplication with *map_step* may be replaced by a leftshift with the *map_shift* parameter).

For all the variants, the reduced bitdepth $M_i$ and the associated set of mapping parameters (e.g., LUT values, *map_step, map_bias,* etc) may be either fixed values known to both the encoder and decoder or may be signaled, for example in SPS, PPS, picture header, slice header, etc.

An example of syntax for coding the integer bound offset parameter according to the second embodiment is depicted in Table 2.

*Table 2: example of syntax for coding the integer bound offset parameter according to the second embodiment*

| slice_header() { | Descriptor |
|---|---|
| **use_qc** | u(1) |
| if (use_qc) { | |
| for(int i=0;i<2;i++){ | |
| **bound_offset_index** | u(M[i]) |
| midrange = (1<<(M[i]-1))-1 | |
| bound_offset_index_center = bound_offset_index-midrange | |
| bound_offset[i] = (bound_offset_index_center << map_shift[i]) + map_bias[i] | |
| } | |
| } | |
| **use_qc** equal to 0 indicates that no qc correction is performed and the corresponding parameters are not coded. use_qc equal to 1 indicates that bound offset indexes are coded. <br> **bound_offset_index** is the M[i] bits bound offset index used to derive the integer bound offset $O_i$ called bound_offset[i] in the syntax table. The derivation also uses the reduced bitdepth M[i], and the mapping shift and bias parameters map_shift[i] and map_bias[i]. | |

**Default value of the integer bound offset parameter**

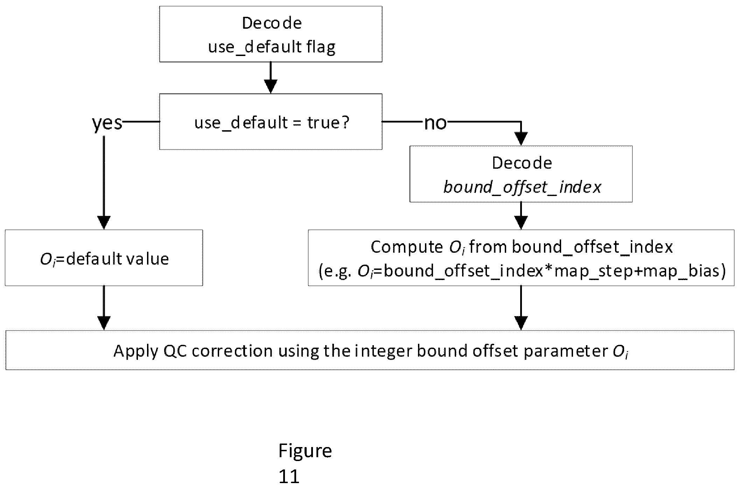

In a third embodiment, a flag *use_default* is signaled in order to further reduce the number of bits signaled in the bitstream and decoded by the decoder as described in Figure 11. If *use_default* is true, $O_i$ is set to a default value and is used for applying QC correction to the region without further signaling. Otherwise, a *bound_offset_index* is decoded from the bitstream and $O_i$ is computed using the *bound_offset_index* as described in the previous embodiments (e.g. using mapping parameters in the case of a signaling with reduced bitdepth $M_i$, or using the *start$_i$* value in the case of a full bitdepth signaling).

The default value may be a fixed value known to the encoder and decoder or may be signaled in the bitstream. In the case where the default value is signaled, the signaling is performed on a higher region level than the *use_default* flag (e.g., default value signaled on the SPS level and *use_default* flag signaled on the slice level).

In a variant a single flag *use_default* is shared for several integer bound offset parameters (e.g., $O_0$ and $O_1$ corresponding to the minimum and the maximum bound offsets $o_{min}$ and $o_{max}$ respectively). In this case, if the flag is true, the default value of each integer bound offset parameter is used instead of signaling a corresponding *bound_offset_index.*

In another variant, the flag *use_default* may be either inferred or signaled depending on parameters of the slice such as a quantization parameter (QP), a Temporal index (Tid), the slice type (e.g. Intra or Inter slice), or depending on the channel type (e.g. luma or chroma). For example, the flag *use_default* may be inferred to false for high quality slices (e.g., Intra slices, slices with QP or Tid below a threshold,...) or for the luma component to indicate that a *bound_offset_index* is signaled. In other cases, (e.g., low quality slices, chroma components,...) *use_default* may be inferred to true to indicate that a default value is used without signaling of a *bound_offset_index.* In another example, the flag *use_default* is only signaled for high quality slices or for the luma component and is inferred to true otherwise. In another example, the flag *use_default* is inferred to false for high quality slices or for the luma component and is signaled otherwise.

In another variant the default value is associated to a default bound offset index. In this case, a value of $O_i$ that is

different from the default value may be signaled by using the default bound offset index. For example, the difference between the default bound offset index and the *bound_offset_index* associated to $O_i$ may be signaled. The *bound_offset_index* is thus obtained by summing the default bound offset index with the signaled difference, and $O_i$ is finally computed using the *bound_offset_index* as described in the previous embodiments.

An example of syntax for coding the integer bound offset parameter according to the third embodiment is depicted in Table 3.

*Table 3: example of syntax for coding the integer bound offset parameter according to the third embodiment*

| slice_header( ) { | Descriptor |
|---|---|
| **use_qc** | u(1) |
| if (use_qc) { | |
| **use_default** | u(1) |
| if (qc_use_default) { | |
| for(int i=0;i<2;i++) | |
| bound_offset[i]=default_bound_offset[i] | |
| } else{ | |
| for(int i=0;i<2;i++){ | |
| **bound_offset_index** | u(M[i]) |
| midrange = (1<<(M[i]-1))-1 | |
| bound_offset_index_center = bound_offset_index - midrange | |
| bound_offset[i] = (bound_offset_index_center << map_shift[i]) + map_bias[i] | |
| } | |
| } | |
| } | |

**use_qc** equal to 0 indicates that no qc correction is performed and the corresponding parameters are not coded. use_qc equal to 1 indicates that some qc correction parameters are coded.

**use_default** equal to 0 indicates that the bound offset indexes are coded. use_default equal to 1 indicates that the bound offset indexes are not coded and the integer bound offsets bound_offset[i] are directly set to their default values default_bound_offset[i].

**bound_offset_index** is the M[i] bits bound offset index used to derive the integer bound offset $O_i$ called bound_offset[i] in the syntax table. The derivation also uses the reduced bitdepth M[i], and the mapping shift and bias parameters map_shift[i] and map_bias[i].

**Region-dependent mapping parameters or default values**

In practice, different default values of the integer bound offset parameter $O_i$ may be better suited to the QC correction of regions with different properties such as the channel type, the slice type, the QP or Tid values, etc. Similarly, given a reduced bitdepth $M_i$, different sets of mapping parameters (and thus different subsets of $2^{Mi}$ allowed values of $O_i$) may be better suited to the QC correction of regions with different properties. Hence, in an embodiment, the set of mapping parameters associated with a bitdepth $M_i$, or the default value of $O_i$ are selected by the encoder and decoder depending on the region to encode or decode (e.g. slice, picture, component, block,...) based on properties of the region such as the region QP or Tid, the slice type (e.g., Intra, Inter), the channel type (e.g., luma, chroma) or the component type (e.g., Y, Cb, Cr).

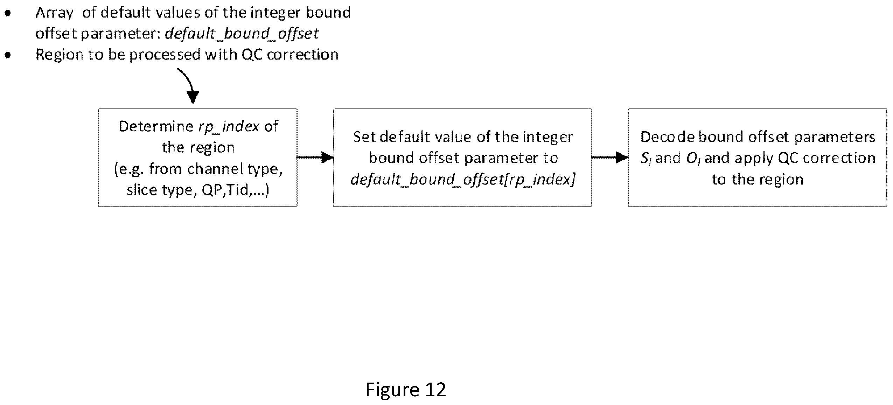

In the case of the default value of the integer bound offset parameter, described in Figure 12, an array *default bound_offset* is defined containing several default values associated with a region property index *rp_index*. Given a region to be processed with QC correction, its corresponding *rp_index* is first determined and the default value of the integer bound offset parameter is thus set as *default_bound_offset* [*rp_index*].

For example, *rp_index* may be a channel type index (e.g., equal to 0 for luma, or 1 for chroma), a component type index (e.g., equal to 0 for luma component, 1 for Cb component, 2 for Cr component), or a slice type index (e.g., equal to 0 for B-slice, 1 for P-slice, 2 for I-slice, or equal to 0 for Intra slice, 1 for Inter slice). In another example, *rp_index* is equal to the QP or Tid value of the region or is associated with a range of QP values or Tid values. In another example, *rp_index* depends on several parameters (e.g., *rp_index* = 0 if the QP is above a QP threshold and if the Tid is above a Tid threshold, or *rp_index* = 1 otherwise).

In a variant, several region property indexes are defined (*rp_index_0,..., rp_index_n*). In this case, the array *default bound_offset* has several dimensions and the default value is obtained as *default_bound_offset[rp_index_0]* ... *[rp_index_n]*.

In the case of mapping parameters, a set of mapping parameters is associated with a reduced bitdepth $M_i$, Hence, the set of mapping parameters for the region may be obtained as *map_params[Mi][rp_index]* (or as *map_params[$M_i$]* *[rp_index_0]* ... *[rp_index_n]* in the case of several region property indexes), where each entry of the array *map_params* contains a set of mapping parameters.

In a variant, each entry of the array *map_params* contains both the set of mapping parameters and the corresponding bitdepth $M_i$, Hence, only the region property index (or indexes) is needed to determine the set of mapping parameters and the bitdepth $M_i$ (e.g., contained in *map_params[rp_index]*).

In a variant, a set of mapping parameters or a default value of the integer bound offset parameter may be associated to a flag indicating the usage of some coding tools, such as DepQuant, RDOQ, or intra predictions. Hence different values of the parameters may be used depending on whether the associated tool is used or not for the region.

In a variant, a region property index *rp_index* is determined based on a per-block classification. A classifier first analyses a block to determine a corresponding class index. Then, a *rp_index* is either directly the class index or is a derived based on the class index and other properties (Tid, QP, channel type, ...). For example, the classifier may be a band classifier (e.g., class depending on the average value of pixels in the block). The classification may also depend on the quantization levels $c_q$ in the block (e.g. number of non-zero quantization levels, sum of absolute values of quantization levels, ...), on the transform coefficients $c_f$ of the block (i.e., transform coefficients of the reconstructed and filtered block $X_f$), on directional gradients of the block, on 2D Laplacian activity, on the size of the block... Alternatively, the classification is done per-frequency or band of frequencies (i.e., positions of the coefficient in the transformed block), for example based on the quantization levels $c_q$ or the transform coefficients $c_f$ in the band of frequencies. In another example, a region property index *rp_index* is directly associated with a band of frequencies. For example, *rp_index* = 0 for a band of low frequencies below a frequency threshold or *rp_index* = 1 for a band of high frequencies above a frequency threshold, where the frequency threshold may depend on the size of the block.

In a variant, this embodiment is used to select at least one of the full bitdepth $N_i$, the corresponding starting value $start_i$, and the integer shift parameter $S_i$, based on the region properties.

**Encoder decision**

In an embodiment, the encoder selects the value of an integer bound offset parameter $O_i$ among the allowed values. The value of $O_i$ is selected to minimize the distortion obtained by applying QC correction to a given region (e.g. slice, picture, etc,...) where the other parameters of the QC correction (e.g., $S_0, S_1, O_j$ with $j \neq i$) are fixed. In order to ensure that $O_1 > O_0$ (and thus $b_{inf} < b_{sup}$) when evaluating the distortion of the QC correction during the selection process of $O_1$, the value of $O_0$ may be fixed to be smaller than the smallest possible value of $O_1$ (e.g., $start_1$). Similarly, during the selection process of $O_0$, the value of $O_1$ may be fixed to be higher than the highest possible value of $O_0$ (e.g., $start_0 + 2^{N0} - 1$).

For each selected integer bound offset parameter $O_i$, the corresponding *bound_offset_index* is then signaled in the bitstream for that region. For faster computations, the distortion may be evaluated in the transform domain, for example using a sum of square errors (SSE) of transform coefficients. This makes it possible to test all the values of *bound_offset_index* without the need to apply the reconstruction steps of the QC correction which include an inverse transform.

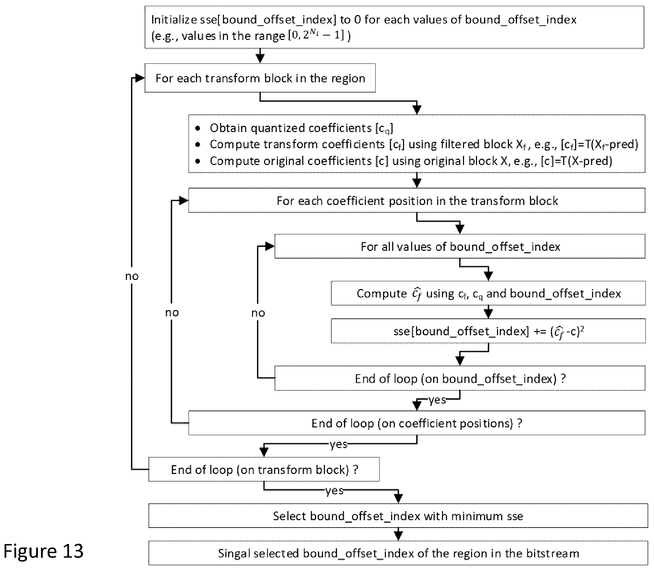

A flowchart of the encoder selection process is described in Figure 13. In an initialization step, the SSE of each possible value of the *bound_offset_index* (e.g. from 0 to $2^{Ni} - 1$ or from 0 to $2^{Mi} - 1$), is initialized to 0.

Then, for each transform block of the region, the quantized transform coefficients $[c_q]$ are obtained (e.g. already computed by the encoder before the QC correction), the transform coefficients $[c_f]$ are computed using the filtered block $X_f$ as in Figure 4, and the original coefficients $[c]$ are computed similarly using the original block $X$ instead of the filtered block $X_f$.

For each coefficient position in the block and for each *bound_offset_index* to be tested, a corrected transform coefficient $\widehat{c_f}$ is computed using the transform coefficient $c_f$, its associated quantized coefficient $c_q$ and the *bound_offset_index*. For example, the corrected transform coefficient may be obtained by first computing the integer bound offset parameter $O_i$ corresponding to the *bound_offset_index* according to the first or the second embodiment, then computing correction bounds $b_{inf}$ and $b_{sup}$ (e.g., with Equation 8) using $c_q$ and $O_i$ and fixed values of the other bound offset parameters (e.g., $S_0$, $S_1$, $O_j$ with $j \neq i$), and finally applying a correction function to $c_f$ using $b_{inf}$ and $b_{sup}$ (e.g.,

$$\widehat{c}_f = \min(\max(c_f, b_{inf})\, b_{sup})\,).$$

Knowing the corrected transform coefficient $\widehat{c}_f$ and the original coefficient c, the squared difference between $\widehat{c}_f$ and c is then added to the SSE of the *bound_offset_index.*

After reaching the end of the loops on the *bound_offset_index,* on the coefficient position in a transform block, and on the transform blocks in a region, the sse over the full region is known for each *bound_offset_index.* Hence the *bound_offset_index* which minimizes the sse over the region may be selected and signaled in the bitstream for that region.

In Figure 13, the selection is only based on a distortion cost since it is assumed that the number of signaled bits does not depend on the selected value of $O_i$ (e.g. always $M_i$ bits for reduced bitdepth signaling or always $N_i$ bits for full bitdepth singaling). However, this may not always be the case. For example, in Figure 11, the default value only requires 1 bit for signaling the *use_default* flag, while the other values require $M_i$ or $N_i$ additional bits for the *bound_offset_index.* Hence in a variant, the selection is based on a rate-distortion cost *rd_cost* which may be computed as *rd_cost* = R + $\lambda$ ∗ D given a rate R, a distortion D and a Lagrangian parameter $\lambda$. In this case, the distortion D of each allowed value of $O_i$ may be computed as in Figure 13 (also including the default value). The rate R may be computed as the total number of bits for signaling $O_i$ (e.g., only 1 bit for the default value in order to signal that *use_default* is true, or $M_i$+1 or $N_i$+1 bits for signaling a *bound_offset_index* along with the *use_default* flag set to false).

**Offline determination of mapping parameters or default value**

In an embodiment, the mapping parameters (e.g. LUT values, *map_step, map_bias,...*) associated with a bitdepth $M_i$, or the default value of the integer bound offset parameter $O_i$, are fixed values known to the encoder and the decoder, that are previously determined by an offline training step. For example, the training may consist of first encoding a set of videos sequences with various QP parameters, where a distortion cost (e.g., SSE, PSNR, ...) of the QC correction is computed and stored for each of the $2^{Ni}$ values of $O_i$ and at each slice or picture.

Then, the default value of $O_i$ may be determined as the value which gives the smallest overall distortion cost e.g., obtained as sum of the distortion costs over all the slices or pictures, all the video sequences and all the encoding QP parameters. Similarly, for a given reduced bitdepth $M_i$, the associated set of mapping parameters may be determined by computing a distortion cost for each combination of values of the mapping parameters in the set. Since a set of mapping parameters is associated with a subset of $2^{Mi}$ allowed values of $O_i$, the distortion cost of the set of mapping parameters may be obtained as the smallest distortion cost among the associated $2^{Mi}$ allowed values of $O_i$.

In the case where the parameters to be determined (e.g. mapping parameters or default value) are associated to a region property index, the overall distortion cost may be computed using only the regions with the corresponding region property index.

**Reusing of mapping parameters or default values**

In an embodiment, a default value of the integer bound offset parameter $O_i$ is determined for a given region (e.g., slice, picture, CTU... ) from previously encoded and decoded regions with a lower or equal temporal index (Tid).

A slice is used here as an example of region identification but any of the region definitions above can be used. For example, a reference slice is selected among the slices contained in the decoded picture buffer (DPB) with the same Tid as the current slice, or alternatively with a lower or equal Tid and the same QP. The reference slice may be signaled explicitly or may be derived (e.g., select closest slice to the current slice in the decoding order, or the slice with the closest QP). The default value of $O_i$ for the current slice is then set equal to the integer bound offset of the reference slice (e.g., equal to the default value of $O_i$ in the reference slice if it does not define a new value, or equal to the new value otherwise). Alternatively, the default value of $O_i$ for the current slice is coded differentially with the integer bound offset value of the reference slice. If no slice is available (e.g., no slice available or referenced by the current slice) a fixed default value may be used instead (as in the previous embodiment). The reference slice may also be selected only among slices that define a new bound offset value (i.e., with *use_default* flag set to false).

Similarly, mapping parameters may be determined from a reference region. In this case, the set of mapping parameters may be updated from the reference set of mapping parameters (i.e., set of mapping parameters of the reference region). For example, the new set of mapping parameter values may be computed on the encoder side by first determining the best value of $O_i$ among the $2^{Ni}$ values according to a rate-distortion cost, e.g., using the method in Figure 13. The new set of mapping parameters is then obtained so that the resulting subset of $2^{Mi}$ values of $O_i$ contains the best value. Note that multiple sets of mapping parameters may satisfy this criterion. Hence, the new set of mapping may be also selected to cause minimal change with the reference set of mapping parameters. For example, considering a LUT mapping, the new LUT may reuse values from the previous LUT, and only the closest value to the best value is updated to the best value. Hence, only the new value and its index in the LUT needs to be signaled to decode the new LUT. In the case of a linear mapping, only the scaling parameter (e.g., *map_step* or *map_shift*) may be updated and signaled. Alternatively, only the *map_bias* parameter may be updated and signaled. The decision of which parameter is updated may be fixed (and thus known to the decoder) or may be signaled, e.g., with single a flag indicating which of the bias or the scaling parameter is updated, or with a flag associated to each parameter indicating if the parameter is updated.

In a variant, the update of the mapping parameters set may be performed by determining several best values of $O_i$ among the $2^{Ni}$ values, where each best value corresponds to a subregion (e.g. each CTU of the slice). The updated mapping parameters may then be determined so that all the best values are among the $2^{Mi}$ allowed values, or so that the error between the best values and their closest allowed values are minimized.

In these examples, when a region is stored in the DPB, the information of the corresponding integer bound offset $O_i$ (or the default value of $O_i$, or the mapping parameters) is also stored along with the region, so that the region can be used as a reference and the corresponding reference information (e.g., integer bound offset $O_i$, or its default value, mapping parameters) is available.

In a variant, a default value or a set of mapping parameters is stored in an Adaptation Parameter Set (APS). In this case a reference default value or reference set of mapping parameters is determined by selecting the corresponding APS. For example, an APS index may be signaled (e.g. in a slice, a picture, a CTU,...) and used to select the APS.

If reference mapping parameters or default values are updated for a region, the updated version may be signaled in a new APS so that they can be reused by other regions.

In a variant, several default values (or sets of mapping parameters) are stored in the same APS, where each default value (or set of mapping parameters) is associated to a region property index. In this case, when a region uses a default value from the APS, it only uses the default value associated with the region property index of the current region.

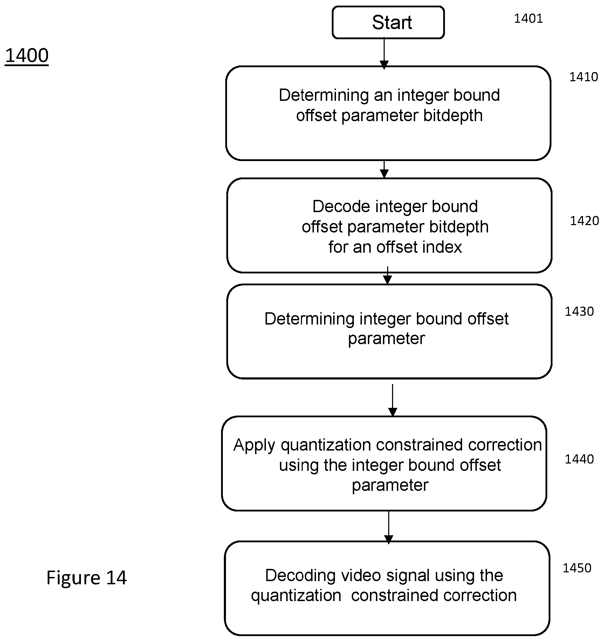

One embodiment of a method 1400 under the general aspects described here is shown in Figure 14. The method commences at start block 1401 and control proceeds to block 1410 for determining an integer bound offset parameter bitdepth. Control proceeds from block 1410 to block 1420 for decoding the integer bound offset parameter bitdepth for an offset index. Control proceeds from block 1420 to block 1430 for determining an integer bound offset parameter using the offset index and mapping parameters comprising at least one of a start value for the integer bound offset parameter, and an integer shift parameter. Control proceeds from block 1430 to block 1440 for applying quantization constrained correction using the integer bound offset parameter. Control proceeds from block 1440 to block 1450 for decoding a video signal using the quantization correction.

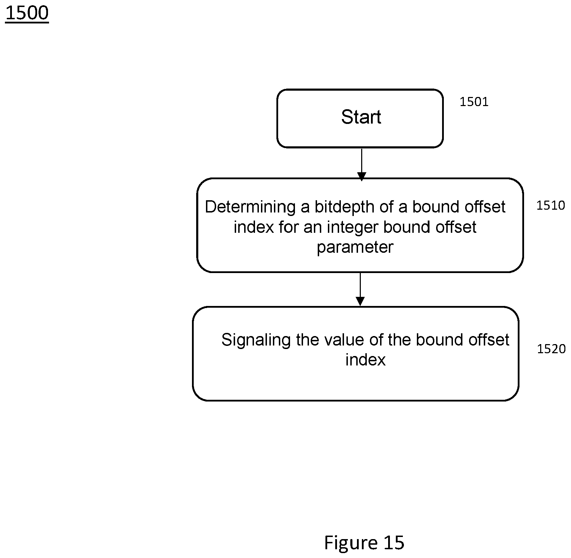

One embodiment of a method 1500 under the general aspects described here is shown in Figure 15. The method commences at start block 1501 and control proceeds to block 1510 for determining a bitdepth of a bound offset index for an integer bound offset parameter to be used for quantization constrained correction of a video signal. Control proceeds from block 1510 to block 1520 for signaling the value of the bound offset index, indicative of the quantization constrained correction used during encoding of the video signal, in a video header of the video bitstream.

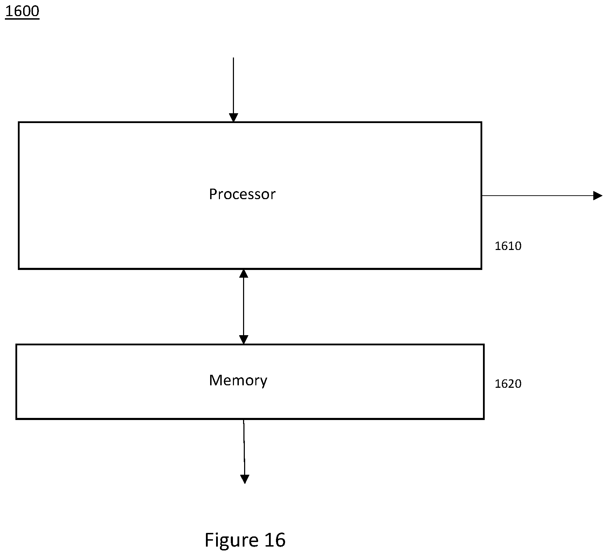

Figure 16 shows one embodiment of an apparatus 1600 for encoding, decoding, compressing or decompressing, or filtering of video data using the aforementioned methods. The apparatus comprises Processor 1610 and can be interconnected to a memory 1620 through at least one port. Both Processor 1610 and memory 1620 can also have one or more additional interconnections to external connections.

Processor 1610 is also configured to either insert or receive information in a bitstream and, either compressing, encoding, decoding, or quantizing using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

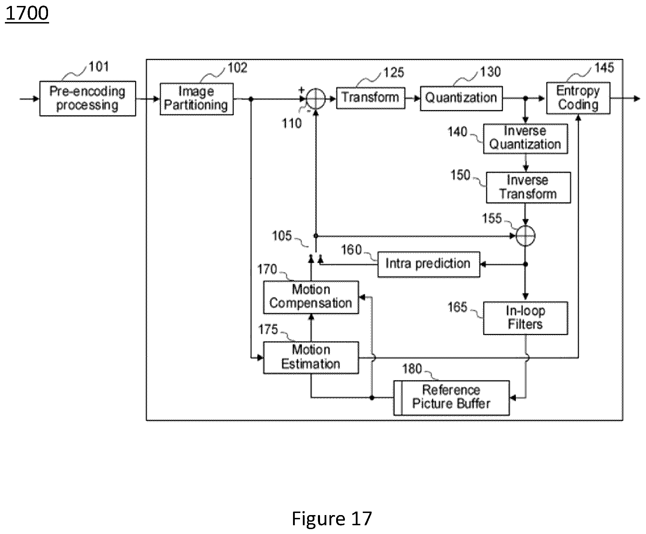

The aspects described and contemplated in this application can be implemented in many different forms. Figures 17, 18, and 19 provide some embodiments, but other embodiments are contemplated and the discussion of Figures 17, 18, and 19 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the intra prediction, entropy coding, and/or decoding modules (160, 260, 145, 230), of a video encoder 100 and decoder 200 as shown in Figure 6 and Figure 7. Moreover, the present aspects are not limited to VVC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application. The specific values are for example purposes and the aspects described are not limited to these specific values.

Figure 17 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

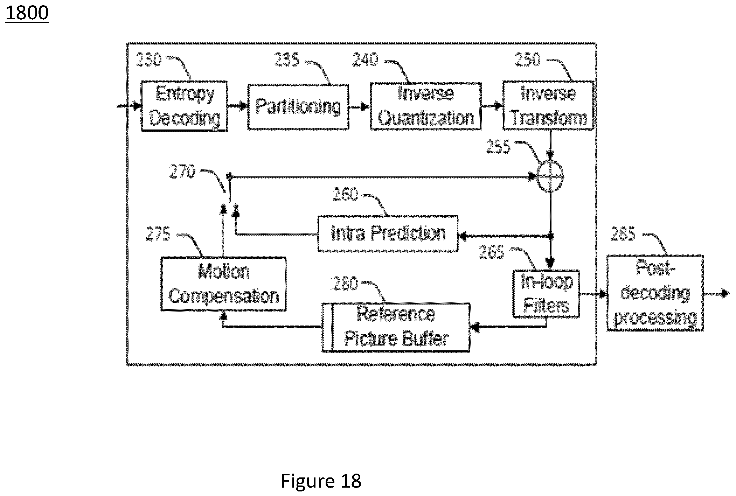

Figure 18 illustrates a block diagram of a video decoder 200. In the decoder 200, a bitstream is decoded by the decoder elements as described below. Video decoder 200 generally performs a decoding pass reciprocal to the encoding pass as described in Figure 17. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

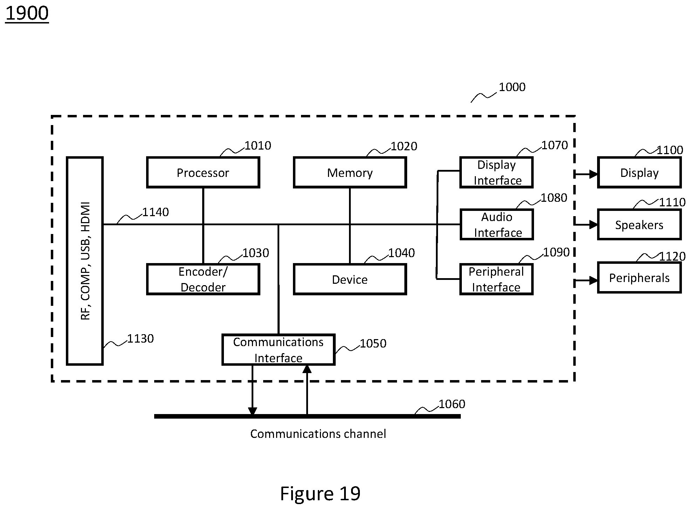

Figure 19 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 8, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises performing an analysis of block vectors neighboring a current video block and determining a prediction by blending predictions of at least two predictors using weights based on said analysis.

At least one embodiment comprises the above embodiment and further comprising encoding or decoding the video block using the determined prediction.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

## Claims

1. A method, comprising:

   determining an integer bound offset parameter bitdepth;
   decoding the integer bound offset parameter bitdepth for an offset index;
   determining an integer bound offset parameter using the offset index and mapping parameters comprising at least one of a start value for the integer bound offset parameter, and an integer shift parameter;
   applying quantization constrained correction using the integer bound offset parameter; and,
   decoding a video signal using the quantization correction.

2. An apparatus, comprising a memory and processor, configured for:

   determining an integer bound offset parameter bitdepth;
   decoding the integer bound offset parameter bitdepth for an offset index;
   determining an integer bound offset parameter using the offset index and mapping parameters comprising at least one of a start value for the integer bound offset parameter, and an integer shift parameter;
   applying quantization constrained correction using the integer bound offset parameter; and,
   decoding a video signal using the quantization correction.

3. A method, comprising:

   determining a bitdepth of a bound offset index for an integer bound offset parameter to be used for quantization constrained correction of a video signal; and,
   signaling the value of the bound offset index, indicative of the quantization constrained correction used during encoding of the video signal, in a video header of the resultant video bitstream.

4. An apparatus, comprising a memory and processor, configured for:

   determining a bitdepth of a bound offset index for an integer bound offset parameter to be used for quantization constrained correction of a video signal; and,
   signaling the value of the bound offset index, indicative of the quantization constrained correction used during encoding of the video signal, in a video header of the resultant video bitstream.

5. The method of Claim 1 or the apparatus of Claim 2, wherein determining an integer bound offset parameter comprises using a linear mapping to compute the integer bound offset parameter from the offset index.

6. The method of any one of Claims 1 or 3, or the apparatus of any one of Claims 2 or 4, wherein a flag indicating that a default value of the integer bound offset parameter is used.

7. The method or the apparatus of Claim 6, further comprising adapting the default value, or the mapping parameters associated with a reduced bitdepth $M_i$, based on properties of the region to decode

8. The method of claim 3 or the apparatus of claim 4, wherein mapping parameters or default values of the integer bound offset parameters are determined in an offline training step.

9. The method of any one of claims 1 through 8, or the apparatus of any one of claims 1 through 8, wherein mapping parameters or default values are reused from previous regions of the video signal.

10. A device comprising:

    an apparatus according to Claim 2; and

at least one of (i) an antenna configured to receive a signal, the signal including the video signal, (ii) a band limiter configured to limit the received signal to a band of frequencies that includes the video block, and (iii) a display configured to display an output representative of the video block.

11. A non-transitory computer readable medium containing data content generated according to the method of any one of claims 3, or 5 through 9, or by the apparatus of any one of claims 4, or 5 through 9, for playback using a processor.

12. A signal comprising video data generated according to the method of any one of claims 3, or 5 through 9, or by the apparatus of any one of claims 4, or 5 through 9, for playback using a processor.

13. A non-transitory computer program product comprising instructions which, when the program is executed by a computer, cause the computer to carry out the method of any one of claims 3 or 5 through 9.

Figure 1

Figure 2

Figure 3

Figure 4

24

Figure 5

Figure 6

EP 4 753 258 A1

Obtain the full bitdepth $N_i$ of the integer bound offset

Decode $N_i$-bits *bound_offset_index*

$O_i=bound\_offset\_index+start_i$

Apply QC correction using the bound offset parameters $O_i$ and $S_i$

Obtain the starting value $start_i$ of the integer bound offset

Obtain $S_i$ (e.g., $S_i=N_i-1$)

Figure 7

EP 4 753 258 A1

Obtain the reduced bitdepth $M_i$ of the integer bound offset

Decode $M_i$-bits *bound_offset_index*

Compute $O_i$ by applying mapping function to the *bound_offset_index* using the mapping parameters

Apply QC correction using the bound offset parameters $O_i$ and $S_i$

Obtain mapping parameters associated with the reduced bitdepth $M_i$

Obtain $S_i$

Figure 8

Figure 9

EP 4 753 258 A1

Figure 10

```
                    ┌─────────────────────┐
                    │      Decode         │
                    │  use_default flag   │
                    └─────────────────────┘
                               │
                               ▼
                    ┌─────────────────────┐
        yes─────────│  use_default = true?│────no──────┐
         │          └─────────────────────┘            │
         │                                             ▼
         │                                ┌─────────────────────────┐
         │                                │        Decode           │
         │                                │   bound_offset_index    │
         │                                └─────────────────────────┘
         │                                             │
         ▼                                             ▼
┌─────────────────────┐         ┌──────────────────────────────────────────────────┐
│ O_i=default value   │         │  Compute O_i from bound_offset_index             │
│                     │         │  (e.g. O_i=bound_offset_index*map_step+map_bias)  │
└─────────────────────┘         └──────────────────────────────────────────────────┘
         │                                             │
         ▼                                             ▼
┌──────────────────────────────────────────────────────────────────────────────────┐
│      Apply QC correction using the integer bound offset parameter O_i              │
└──────────────────────────────────────────────────────────────────────────────────┘
```

Figure
11

- Array of default values of the integer bound offset parameter: *default_bound_offset*
- Region to be processed with QC correction

| Determine *rp_index* of the region (e.g. from channel type, slice type, QP,Tid,...) | → | Set default value of the integer bound offset parameter to *default_bound_offset[rp_index]* | → | Decode bound offset parameters $S_i$ and $O_i$ and apply QC correction to the region |

Figure 12

Initialize sse[bound_offset_index] to 0 for each values of bound_offset_index (e.g., values in the range $[0, 2^{N_i} - 1]$ )

For each transform block in the region

- Obtain quantized coefficients [$c_q$]
- Compute transform coefficients [$c_f$] using filtered block $X_f$, e.g., [$c_f$]=T($X_f$-pred)
- Compute original coefficients [c] using original block X, e.g., [c]=T(X-pred)

For each coefficient position in the transform block

For all values of bound_offset_index

Compute $\widehat{c_f}$ using $c_f$, $c_q$ and bound_offset_index

sse[bound_offset_index] += $(\widehat{c_f}$-c$)^2$

End of loop (on bound_offset_index) ?

yes

no

End of loop (on coefficient positions) ?

yes

no

End of loop (on transform block) ?

yes

no

Select bound_offset_index with minimum sse

Singal selected bound_offset_index of the region in the bitstream

Figure 13

Figure 14

1400

**1401** Start

**1410** Determining an integer bound offset parameter bitdepth

**1420** Decode integer bound offset parameter bitdepth for an offset index

**1430** Determining integer bound offset parameter

**1440** Apply quantization constrained correction using the integer bound offset parameter

**1450** Decoding video signal using the quantization constrained correction

1500

Figure 15

1600

Processor

1610

Memory

1620

Figure 16

1700

Figure 17

EP 4 753 258 A1

Figure 18

EP 4 753 258 A1

1900

1000

Display
Interface 1070

Display 1100

Processor 1010

Memory 1020

RF, COMP, USB, HDMI

1140

Audio
Interface 1080

Speakers 1110

Encoder/
Decoder 1030

Device 1040

Peripheral
Interface 1090

Peripherals 1120

1130

Communications
Interface 1050

1060

Communications channel

Figure 19

Europäisches
Patentamt
European
Patent Office
Office européen
des brevets

# EUROPEAN SEARCH REPORT

**Application Number**

EP 24 30 6979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/200011 A1 (INTERDIGITAL CE PATENT HOLDINGS SAS [FR]) 3 October 2024 (2024-10-03) * Eq. 11; page 7, lines 7-30; figure 7 * * page 15, lines 15-16 * | 1-13 | INV. H04N19/124 H04N19/147 H04N19/174 H04N19/61 |
| Y | US 2013/114695 A1 (JOSHI RAJAN LAXMAN [US] ET AL) 9 May 2013 (2013-05-09) * figure 11 * | 1-13 | |
| A | SMITH S ED - SMITH S W: "Digital Signal Processing: A Practical Guide for Engineers and Scientists", [DEMYSTIFYING TECHNOLOGY SERIES], NEWNES, 1 January 2003 (2003-01-01), XP040425435, ISBN: 978-0-7506-7444-7 | 1-13 | |
| Y | WO 2008/057308 A2 (THOMSON LICENSING [FR]; KAO MENG-PING [US] ET AL.) 15 May 2008 (2008-05-15) * figure 6 * | 1-13 | |

**TECHNICAL FIELDS SEARCHED (IPC)**

H04N

The present search report has been drawn up for all claims

| Place of search | Date of completion of the search | Examiner |
|---|---|---|
| The Hague | 6 May 2025 | Satti, Shahid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6979

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| WO 2024200011 A1 | 03-10-2024 | NONE | |
| US 2013114695 A1 | 09-05-2013 | AU 2012335896 A1 | 29-05-2014 |
| | | BR 112014011054 A2 | 02-05-2017 |
| | | CA 2853835 A1 | 16-05-2013 |
| | | CN 104137546 A | 05-11-2014 |
| | | EP 2777263 A1 | 17-09-2014 |
| | | ES 2715838 T3 | 06-06-2019 |
| | | HK 1199995 A1 | 24-07-2015 |
| | | HU E043156 T2 | 28-08-2019 |
| | | IL 232284 A | 28-09-2017 |
| | | JP 5902311 B2 | 13-04-2016 |
| | | JP 2014535250 A | 25-12-2014 |
| | | KR 20140089583 A | 15-07-2014 |
| | | MY 174583 A | 28-04-2020 |
| | | PH 12014500983 A1 | 18-08-2017 |
| | | RU 2014123320 A | 20-12-2015 |
| | | SG 11201401566U A | 26-09-2014 |
| | | TW 201334549 A | 16-08-2013 |
| | | US 2013114695 A1 | 09-05-2013 |
| | | WO 2013070766 A1 | 16-05-2013 |
| | | ZA 201404179 B | 25-11-2020 |
| WO 2008057308 A2 | 15-05-2008 | BR PI0717936 A2 | 03-12-2013 |
| | | CN 101543076 A | 23-09-2009 |
| | | CN 104902278 A | 09-09-2015 |
| | | CN 105357527 A | 24-02-2016 |
| | | CN 105357528 A | 24-02-2016 |
| | | CN 105357529 A | 24-02-2016 |
| | | CN 105376567 A | 02-03-2016 |
| | | CN 105376572 A | 02-03-2016 |
| | | CN 105376573 A | 02-03-2016 |
| | | CN 105376574 A | 02-03-2016 |
| | | CN 105392003 A | 09-03-2016 |
| | | CN 105392004 A | 09-03-2016 |
| | | CN 105392005 A | 09-03-2016 |
| | | CN 105392006 A | 09-03-2016 |
| | | CN 105392007 A | 09-03-2016 |
| | | CN 105407355 A | 16-03-2016 |
| | | CN 105430398 A | 23-03-2016 |
| | | CN 105430399 A | 23-03-2016 |
| | | EP 2082583 A2 | 29-07-2009 |
| | | EP 4224853 A1 | 09-08-2023 |
| | | HK 1214706 A1 | 29-07-2016 |
| | | HK 1222076 A1 | 16-06-2017 |
| | | HK 1222077 A1 | 16-06-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 6979

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | | Publication date |
|---|---|---|---|---|
| | | HK | 1222494 A1 | 30-06-2017 |
| | | JP | 5801032 B2 | 28-10-2015 |
| | | JP | 2010509842 A | 25-03-2010 |
| | | US | 2009257664 A1 | 15-10-2009 |
| | | US | 2016112725 A1 | 21-04-2016 |
| | | US | 2017238021 A1 | 17-08-2017 |
| | | US | 2021337241 A1 | 28-10-2021 |
| | | US | 2024244270 A1 | 18-07-2024 |
| | | WO | 2008057308 A2 | 15-05-2008 |

EPO FORM P0459

For more details about this annex : see Official Journal of the European Patent Office, No. 12/82

page 2 of 2